# EUROPÄISCHE PATENTSCHRIFT

(11) **EP 3 553 397 B1**
(45) Veröffentlichungstag und Bekanntmachung des Hinweises auf die Patenterteilung: **27.10.2021**
(21) Anmeldenummer: 19167737.6
(22) Anmeldetag: 08.04.2019
(51) Int. Cl.: H05B 3/14, H05B 3/34, F24D 13/02, B64C 1/18

(54) **BEHEIZBARE FUSSBODENPLATTE UND FUSSBODENHEIZSYSTEM FÜR EIN FLUGZEUG**
HEATABLE FLOOR PANEL AND FLOOR HEATING SYSTEM FOR AN AIRCRAFT
PLAQUE DE REVÊTEMENT DE SOL CHAUFFABLE ET SYSTÈME DE CHAUFFAGE AU SOL POUR UN AVION

(30) Priorität: 10.04.2018 DE 102018002917
(43) Veröffentlichungstag der Anmeldung: 16.10.2019
(73) Patentinhaber: Airbus Operations GmbH, 21129 Hamburg (DE)
(72) Erfinder: Linde, Peter, 21129 Hamburg (DE); Hegenbart, Matthias, 21129 Hamburg (DE)

(56) Entgegenhaltungen:
- EP-A2- 3 419 381
- WO-A1-95/15670
- WO-A2-2012/159608
- US-A1- 2015 344 138

## Beschreibung

### Gebiet der Erfindung

Die Erfindung betrifft eine beheizbare Fußbodenplatte für ein Flugzeug sowie ein Fußbodenheizsystem für den Kabinenboden einer Flugzeugkabine.

### Hintergrund der Erfindung

Bei kommerziell genutzten Flugzeugen ist eine angemessene Temperaturverteilung in der Flugzeugkabine wichtig für den Komfort der Passagiere, Piloten und Flugbegleiter. Aufgrund des vergleichsweise direkten Kontaktes zwischen dem Fußboden und der Struktur eines Flugzeuges kann es jedoch prinzipiell zu einem unerwünschten Wärmeverlust vom Kabinenraum zur Außenhaut kommen.

Dieser Wärmeverlust hat bei niedrigen Umgebungstemperaturen, wie sie in der üblichen Flughöhe von kommerziellen Flugzeugen oder bei kaltem Wetter auch am Boden herrschen, zur Folge, dass der Fußboden im Flugzeug auskühlen kann. Insbesondere in den Bereichen nahe der Flugzeugtüren kann es zu einer verstärkten Abkühlung kommen, da die Flugzeugtüren am Boden typischerweise geöffnet werden.

Um eine unerwünschte Abkühlung zu verhindern ist es bekannt, den Fußboden mittels elektrischer Heizmatten zu beheizen. Diese können auch im Bereich der Flugzeugtüren vorgesehen sein.

Die WO2012/159608 A2 betrifft eine Verbundstruktur für ein Luftfahrzeugbauteil zum Bilden eines Strukturelements eines Luftfahrzeuges mit einer in der Verbundstruktur integrierten Eisschutzvorrichtung zur Vermeidung einer Eisbildung und/oder zur Enteisung, wobei die Eisschutzvorrichtung ein flächenhaftes elektrisches Heizelement aufweist, das unterhalb einer äußeren Schicht einer Außenoberfläche des Luftfahrzeugbauteiles in die Verbundstruktur eingebettet ist.

Die WO 95/15670 A1 betrifft ferner einen elektrisch leitfähigen Verbundheizkörper, der Wärme, die durch einen dem Heizkörper zugeführten elektrischen Strom erzeugt wird, auf eine Oberfläche übertragen kann und der umfasst: Ein im allgemeinen koplanares, im Wesentlichen poröses Band aus elektrisch leitfähigen metallbeschichteten Substratfasern mit elektrischen Anschlusseinrichtungen zum Anschließen des elektrischen Stroms an das Band; und mehrere, Kräfte aufnehmende Schichten in Verbindung mit dem elektrisch leitfähigen Band, wobei eine erste Kräfte aufnehmende Schicht so angeordnet ist, dass sich ein Kontakt mit der Oberfläche ergibt.

Die US 2015 0344138 A1 betrifft darüber hinaus ein eingebettetes Leitersystem, das den Einsatz in der Luftfahrt und in anderen Fahrzeugen ermöglicht. Entsprechend dieser Offenbarung umfasst ein multifunktionales Verbundsystem einen Kern, mehrere strukturelle Verbundfaserschichten, ein Matrixmaterial, eine zusammengesetzte Leiteranordnung, wobei die zusammengesetzte Leiteranordnung einen oder mehrere Leiter aufweist, die zwischen zwei oder mehreren Isolierschichten angeordnet sind, eine elektrische Stromquelle, die elektronisch mit der zusammengesetzten Leiteranordnung gekoppelt ist, wobei die elektrische Stromquelle so konfiguriert ist, dass sie elektrischen Strom durch mindestens einen oder mehrere Leiter leitet.

Schließlich betrifft die EP3419381 A2 ein elektromechanisches Eisschutzsystem mit kohlenstoffadditivbeladenen thermoplastischen Heizelementen. Das Eisschutzsystem umfasst: flexible und thermisch stabile Kunststoff-Platten, die mit Kohlenstoffzusätzen beladen sind, wie beispielsweise Kohlenstoff-Nanoröhren (CNT), Graphen, Nano-Kohlenstoff Fasern, Graphitpulver oder andere Kohlenstoff-Allotrope. Diese Platten sind an die gewünschten Oberflächen anpassbar und verhindern die Migration von Kohlenstoffablagerungen.

Es ist die Aufgabe der vorliegenden Erfindung, eine verbesserte Lösung zur Beheizung des Fußbodens eines Flugzeuges, insbesondere im Bereich der Flugzeugtüren, bereitzustellen.

### Beschreibung der Erfindung

Die Aufgabe der Erfindung wird gelöst durch eine beheizbare Fußbodenplatte für ein Flugzeug, gemäß Anspruch 1. Eine der vorliegenden Erfindung zugrunde liegende Idee besteht darin, beschichtete Kohlenstofffasern als elektrische Leiter für eine beheizbare Fußbodenplatte bzw. für ein Fußbodenheizsystem zu verwenden. Die Leitungsfasern sind erfindungsgemäß in der Fußbodenplatte integriert, wobei eine Stromquelle endseitig an die Fasern angelegt werden kann, um einen Heizstrom durch diese zu leiten. Aufgrund der elektrisch isolierenden Beschichtung der Leitungsfasern können Leckströme oder ähnliche Effekte vollständig vermieden werden, da sich die isolierten Fasern ohne weiteres berühren können, ohne dass es zu einem Leckstrom kommt. Derartige Beschichtungen von Kohlenstofffasern können mit einer sehr hohen Temperaturbeständigkeit von bis zu über 700 Grad Celsius auch in einer Massenfertigung relativ kostengünstig und zeiteffizient hergestellt werden. Ein weiterer Vorteil der Erfindung ergibt sich dadurch, dass die Kohlenstofffasern der Leitungsfasern direkt als Verstärkungsfasern der Faserverbundschicht dienen können und gewissermaßen einen natürlichen Bestandteil der Faserverbundschicht bilden, ohne dass es zu Diskontinuitäten oder elektrochemischen Reaktionen kommt. Die elektrisch isolierende Beschichtung kann des Weiteren derart ausgewählt werden, dass es zu keinen Beeinträchtigungen des Bindungsverhaltens kommt, d.h. die Leitungsfasern ein ähnliches Bindungsverhalten aufweisen wie unbeschichtete Kohlenstofffasern.

Prinzipiell können die Leitungsfasern in der Faserverbundherstellung genauso verarbeitet und behandelt werden wie üblicherweise verwendete unbeschichtete Kohlenstofffasern. Darüber hinaus können die Leitungsfasern sogar direkt als Verstärkungsfasern des Faserverbundbauteils wirken.

Nicht alle Fasern der erfindungsgemäßen Fußbodenplatte müssen als Leitungsfasern, also als Kohlenstofffasern mit einer elektrisch isolierenden Beschichtung, ausgebildet sein. Es kann in der Faserverbundschicht auch nur ein bestimmter Anteil der Fasern als Leitungsfasern ausgebildet sein und ein anderer Anteil der Fasern ist herkömmlich, also beispielsweise als nicht stromdurchflossene Fasern, ausgebildet (d.h. ohne isolierende Beschichtung und/oder in der Form einer nicht elektrisch leitende Glasfaser). Die erfindungsgemäßen Leitungsfasern sind in der Regel massive bzw. feste Fasern (also mit einem durchgehenden Leitungsquerschnitt). Prinzipiell sind aber auch erfindungsgemäße Leitungsfasern denkbar, die entlang ihrer Faserlängsrichtung einen Hohlraum aufweisen (Hohlfasern).

Die Stützebene der erfindungsgemäßen Fußbodenplatte kann beispielsweise eine Schicht mit einer Honigwabenstruktur umfassen. Derartige Honigwabenstrukturen verleihen der Flugzeugbodenplatte im Wesentlichen ihre strukturelle Festigkeit. Es versteht sich, dass zusätzlich zu einer solchen Honigwabenstruktur auch noch weitere Faserverbundstrukturen, wie eine oder mehrere weitere Faserverbundschichten (z.B. Pre-pregs, etc.) ein- oder beiderseits der Honigwabenstruktur vorgesehen sein können, um für eine zusätzliche Festigkeit der Stützebene zu sorgen.

Durch die wärmeleitende Ebene wird die in der wärmeerzeugenden Ebene erzeugte Wärme gleichmäßig verteilt. Die wärmeleitende Ebene ist typischerweise kabinenseitig (bzw. oben) an der Fußbodenplatte angeordnet und hat somit auch die Funktion, den Einwirkungen, welche sich durch den Bodenverkehr ergeben, zu widerstehen. In der Regel sind die wärmeleitende Ebene über (oberhalb von) der wärmeerzeugenden Ebene und die wärmeerzeugende Ebene über der Stützebene angeordnet.

Die erfindungsgemäße Fußbodenplatte kann beispielsweise durch ein Verfahren mit den folgenden Schritten hergestellt werden: Übereinander Anordnen der Stützebene, der wärmeerzeugenden Ebene und der wärmeleitenden Ebene, und gemeinsames Aushärten der Ebenen, so dass sich eine Verbundbodenplatte bildet. Erfindungsgemäß wirken die Kohlenstofffasern der Leitungsfasern nicht nur als Heizelemente sondern gleichzeitig auch als Verstärkungselemente der Faserverbundschicht.

Bei einer bevorzugten Ausführungsform bilden die Leitungsfasern einen oder mehrere geschlossene Stromkreise. Somit kann in vorteilhafter und erfindungsgemäßer Weise ein Heizstrom durch die Leitungsfasern geleitet werden. Durch die elektrisch isolierende Beschichtung werden Leckströme vermieden. Die isolierten Fasern können sich ohne weiteres berühren, ohne dass es zu einem Kurzschluss kommt.

Bevorzugt ist auch eine Ausführungsform, bei der die Form der Anordnung der Leitungsfasern in der Faserverbundschicht ausgewählt ist aus der Gruppe: Einzelfaser, Faserbündel, Faserbänder, Fasergelege, Fasermatten, Fasergewebe und Faservliese. Die erfindungsgemäßen Leitungsfasern können in unterschiedlichen Varianten angeordnet bzw. integriert werden. Die erfindungsgemäße Heizfunktion der Leitungsfasern bleibt prinzipiell und vorteilhaft unabhängig von der Anordnungsform der Leitungsfasern erhalten.

Bevorzugt weist die elektrisch isolierende Beschichtung eine Dicke im Bereich von 0,1 Mikrometer bis 1 Mikrometer auf. Insbesondere kann die elektrisch isolierende Beschichtung eine Dicke von 0,5 Mikrometer aufweisen. Die elektrisch isolierende Beschichtung umgibt die Kohlenstofffasern der Leitungsfasern vollständig. Mit anderen Worten: die elektrisch isolierende Beschichtung ist auf den Kohlenstofffasern angebracht. Die Kohlenstofffasern können beispielsweise einen Durchmesser zwischen 6 und 7 Mikrometer aufweisen, sodass sich ein Durchmesser der Leitungsfasern von etwa 7 bis 8 Mikrometer ergibt.

Bei einer ebenfalls bevorzugten Ausführungsform sind die Leitungsfasern, derart in der Faserverbundschicht integriert, dass die Leitungsfasern zumindest endseitig aus der Faserverbundschicht herausragen. Dadurch, dass die Leitungsfasern endseitig, also an ihren jeweiligen Enden, über die Faserverbundschicht überstehen, kann eine Stromquelle in einfacher Art und Weise an die Enden angeschlossen werden.

Die elektrisch isolierende Beschichtung ist als Polymer-Elektrolyt-Beschichtung ausgebildet. Die Beschichtung kann insbesondere als feste Polymer-Elektrolyt-Beschichtung (englisch: ,.solid polymer electrolyte") ausgebildet sein. Beispielsweise kann die Polymer-Elektrolyt-Beschichtung ein Methoxypolyethylenglycoi-Monomethacrylat enthalten (englisch: "methoxy polyethyleneglycol monomethacrylate"). Derartige Polymer-Elektrolyt Beschichtungen können eine Temperaturbeständigkeit von mindestens 700 Grad Celsius aufweisen, dabei jedoch gleichzeitig hervorragende Bindungseigenschaften für die Einbindung in faserverstärkte Bauteile, z.B. in ein kohlenstofffaserverstärktes Thermoplast, bieten.

Ebenfalls bevorzugt ist eine Ausführungsform der beheizbaren Fußbodenplatte, bei der die wärmeleitende Ebene zumindest teilweise aus Titan oder einer Titanlegierung gebildet ist. Derartige wärmeleitende Ebenen bzw. Schichten, die Teil solcher wärmeleitender Ebenen sind, haben vorteilhafterweise gleichzeitig eine hohe Wärmeleitfähigkeit und Festigkeit, um dem Bodenverkehr in einer Flugzeugkabine zu widerstehen. Andere Metalle sind nicht ausgeschlossen. Die wärmeleitenden Ebenen aus Titan bzw. aus einer Titanlegierung können beispielsweise mittels eines Klebstoffs auf die wärmeerzeugende Ebene, insbesondere auf die Faserverbundschicht, aufgeklebt werden.

Die Aufgabe der Erfindung wird ferner gelöst durch ein Fußbodenheizsystem für den Kabinenboden einer Flugzeugkabine, mit einer erfindungsgemäßen Fußbodenplatte und mit einer Stromquelle zur Bereitstellung elektrischer Heizleistung, wobei die Stromquelle elektrisch an die Fußbodenplatte, insbesondere an den oder die geschlossen Stromkreise angeschlossen ist. Das erfindungsgemäße Fußbodenheizsystem macht im Wesentlichen von denselben Vorteilen Gebrauch, wie die erfindungsgemäße beheizbare Fußbodenplatte.

Bei einer bevorzugten Ausführungsform des Fußbodenheizsystems weist das Fußbodenheizsystem ferner eine Temperatursensoren umfassende Regeleinheit auf, mittels derer die Heizleistung der Stromquelle regelbar ist. Auf diese Weise kann der durch die Leitungsfasern geleitete Strom ständig angepasst werden, falls es lokal oder global in der Flugzeugkabine zu einer Abweichung von einer vorgegebenen oder gewünschten Solltemperatur kommen sollte.

Schließlich ist eine weitere Ausführungsform des Fußbodenheizsystems bevorzugt, bei dem die Fußbodenplatte im Bodenbereich einer Flugzeugtüre angeordnet ist. Auf diese Weise können die besonders von einer lokalen Auskühlung betroffenen Bereiche der Flugzeugtüren gezielt erwärmt und somit der Komfort der Passagiere und Flugbegleiter verbessert werden.

Die oben beschriebenen Aspekte und weitere Aspekte, Merkmale und Vorteile der Erfindung können ebenfalls aus den Beispielen der Ausführungsform entnommen werden, welche im Folgenden unter Bezugnahme auf die anhängenden Zeichnungen beschrieben wird.

### Beschreibung der Zeichnungen

In den Figuren werden gleiche Bezugszeichen für gleiche oder zumindest ähnliche Elemente, Komponenten oder Aspekte verwendet. Es wird angemerkt, dass im Folgenden eine Ausführungsform im Detail beschrieben wird, die lediglich illustrativ und nicht beschränkend sind. In den Ansprüchen schließt das Wort "aufweisend" nicht andere Elemente aus und der unbestimmte Artikel "ein" schließt eine Mehrzahl nicht aus. Alleinig der Umstand, dass bestimmte Merkmale in verschiedenen abhängigen Ansprüchen genannt sind, beschränkt nicht den Gegenstand der Erfindung. Auch Kombinationen dieser Merkmale können vorteilhaft eingesetzt werden. Die Bezugszeichen in den Ansprüchen sollen nicht den Umfang der Ansprüche beschränken. Die Figuren sind nicht maßstäblich zu verstehen sondern haben nur schematischen und illustrativen Charakter. Es zeigen
- Figur 1: einen Querschnitt durch eine erfindungsgemäße beheizbare Fußbodenplatte,
- Figur 2: eine perspektivische Ansicht einer erfindungsgemäßen Leitungsfaser,
- Figur 3: eine Draufsicht auf ein erfindungsgemäßes Fußbodenheizsystem mit einer Fußbodenplatte,
- Figur 4: einen Längsschnitt durch einen Abschnitt eines Flugzeugrumpfs im Bereich einer Flugzeugtüre,
- Figur 5: einen Längsschnitt durch einen Abschnitt eines Flugzeugrumpfs im Bereich der Flugzeugkabine, und
- Figur 6: ein Flugzeug mit einer erfindungsgemäßen Fußbodenplatte bzw. einem erfindungsgemäßen Fußbodenheizsystem.

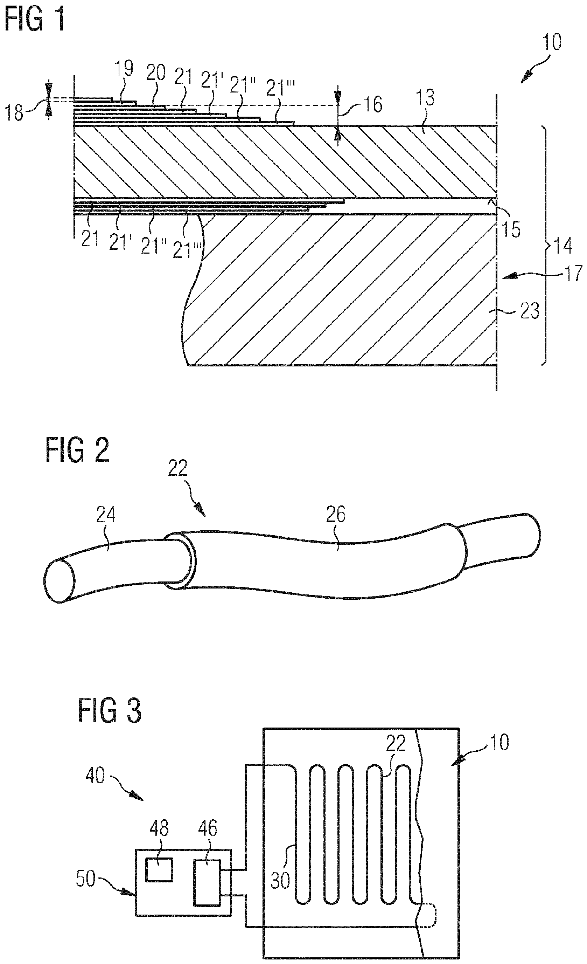

Die **Figur 1** zeigt eine beheizbare Fußbodenplatte 10 für ein Flugzeug 12. Die Fußbodenplatte 10 weist eine Stützebene 14, eine wärmeerzeugende Ebene 16 und eine wärmeleitende Ebene 18 auf.

Die wärmeerzeugende Ebene 16 umfasst dabei mindestens eine Faserverbundschicht 20, die ihrerseits Fasern und eine die Fasern umgebende Matrix aufweist (nicht näher dargestellt). Die wärmeerzeugende Ebene 16 kann neben der mindestens einen Faserverbundschicht 20 auch noch weitere Faserverbundschichten 21, 21', 21", 21'" aufweisen. Diese weiteren Faserverbundschichten 21, 21', 21", 21‴ können beispielsweise herkömmliche glasfaserverstärkte oder kohlenstofffaserverstärkte Kunststoffe (GFK oder CFK) sein.

Im Unterschied hierzu sind bei der mindestens einen Faserverbundschicht 20, die Fasern zumindest teilweise als Leitungsfasern 22 ausgebildet (vgl. Fig. 2). Hierzu sind die Leitungsfasern 22 als Kohlenstofffasern 24 mit einer elektrisch isolierenden Beschichtung 26 ausgebildet. Die Leitungsfasern 22 können als elektrische Leiter und somit als elektrische Heizelemente zum Beheizen der Fußbodenplatte 10 verwendet werden. Die Leitungsfasern 22 sind dabei in die Fußbodenplatte 10 integriert, wobei eine Stromquelle 46 (vgl. Fig. 3) an die Leitungsfasern 22 angelegt werden kann, um einen Heizstrom durch diese zu leiten. Aufgrund der elektrisch isolierenden Beschichtung 26 der Leitungsfasern 22 werden Leckströme vermieden. Die Leitungsfasern 22 können sich berühren und dabei nicht nur als Stromleiter sondern gleichzeitig auch als Verstärkungsfasern der Faserverbundschicht 20 dienen.

Die wärmeleitende Ebene 16 ist zumindest teilweise aus Titan gebildet und mittels einer Klebeschicht 19 auf die wärmeerzeugende Ebene 16 aufgebracht. Wärmeleitende Ebenen 16 aus Titan zeigen eine vorteilhaft wirkungsvolle und räumlich homogen verteilte Wärmeleitung bzw. Wärmeverteilung.

Die Stützebene 14 umfasst eine Honigwabenstruktur 13 und auf der Unterseite 15 der Honigwabenstruktur 13 angeordnete mehrlagige Faserbundschichten 21, 21', 21", 21‴. Schließlich weist die Stützebene 14 in einem unteren Bereich 17 eine thermische Isolierung 23 auf. Die thermische Isolierung 23 kann beispielsweise aus einem Schaummaterial mit einer geringen Wärmeleitfähigkeit gebildet sein. Durch die thermische Isolierung 23 ist die Fußbodenplatte 10 thermisch von einer den Fußboden tragenden Struktur nahezu vollständig entkoppelt.

Die in Figur 2 dargestellte elektrisch isolierende Beschichtung 26 kann eine Dicke im Bereich von 0,1 Mikrometer bis 1 Mikrometer aufweisen. Die Kohlenstofffasern 24 können beispielsweise einen Durchmesser zwischen 6 und 7 Mikrometer aufweisen, sodass sich ein Durchmesser der Leitungsfasern 22 von etwa 7 bis 8 Mikrometer ergibt. Die elektrisch isolierende Beschichtung 26 ist als Polymer-Elektrolyt-Beschichtung ausgebildet. Derartige Polymer-Elektrolyt Beschichtungen können eine Temperaturbeständigkeit von mindestens 700 Grad Celsius aufweisen, dabei jedoch gleichzeitig hervorragende Bindungseigenschaften für die Einbindung in faserverstärkte Bauteile bieten.

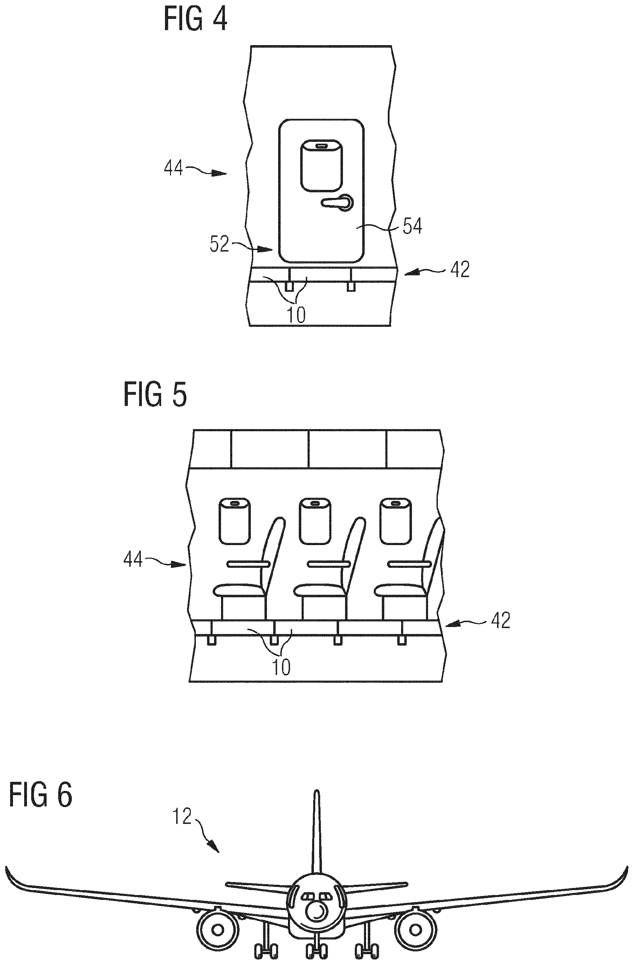

Die **Figur 3** zeigt ein Fußbodenheizsystem 40 für den Kabinenboden 42 einer Flugzeugkabine 44 (vgl. Fign. 4 und 5). Das Fußbodenheizsystem 40 umfasst eine Fußbodenplatte 10 und eine Stromquelle 46 zur Bereitstellung elektrischer Heizleistung. Die Stromquelle 46 ist elektrisch leitend an die Fußbodenplatte 10 angeschlossen. Das Fußbodenheizsystem 40 weist des Weiteren eine Regeleinheit 50 mit Temperatursensoren 48 auf, durch die die Heizleistung der Stromquelle 46 regelbar ist. Durch die Regeleinheit 50 kann der in den Leitungsfasern 22 elektrisch geleitete Strom kontinuierlich angepasst werden, sofern es zu einer Abweichung von einer gewünschten Solltemperatur kommt und man die Abweichung kompensieren möchte.

Die Leitungsfasern 22 sind so in der Faserverbundschicht 20 integriert, dass die Leitungsfasern 22 endseitig aus der Faserverbundschicht 20 herausragen und elektrisch angeschlossen werden können. Die Leitungsfasern 22 bilden einen geschlossenen Stromkreis 30, wobei die Stromquelle 46 elektrisch leitend an den geschlossen Stromkreis 30 angeschlossen ist.

In der Figur 3 sind die den geschlossenen Stromkreis 30 bildenden Leitungsfasern 22 lediglich beispielhaft in der Form einer mäandrierenden und fortlaufenden Einzelfaser in der Faserverbundschicht 20 ausgewählt und dargestellt. Alternativ kann die Form der Anordnung der Leitungsfasern 22 in der Faserverbundschicht 20 ausgewählt sein aus der Gruppe: Faserbündel, Faserbänder, Fasergelege, Fasermatten, Fasergewebe oder Faservliese. Dabei ist es dann prinzipiell auch möglich, eine Vielzahl an geschlossenen Stromkreisen 30 zum Beheizen der Fußbodenplatte 10 zu realisieren.

In der **Figur 4** ist die Fußbodenplatte 10 im Bodenbereich 52 einer Flugzeugtüre 54 angeordnet und kann somit die in der Regel besonders vom Auskühlen betroffenen Regionen der Flugzeugkabine 44 vorteilhaft heizen.

Die **Figur 5** zeigt eine zusätzliche oder alternative Anordnung der Fußbodenplatte 10 im Bodenbereich 52 eines Flugzeugkabinenraums durch den mittelbar die Temperatur in der Flugzeugkabine 44 geregelt werden kann.

In **Figur 6** ist schließlich ein Flugzeug 12 dargestellt, in das eine Fußbodenplatte 10 bzw. ein Fußbodenheizsystem 40 integriert ist.

## Patentansprüche

1. Beheizbare Fußbodenplatte (10) für ein Flugzeug (12), mit:
einer Stützebene (14),
einer wärmeerzeugenden Ebene (16), und
einer wärmeleitenden Ebene (18),
wobei die wärmeerzeugende Ebene (16) eine Faserverbundschicht (20) mit Fasern und mit einer die Fasern umgebenden Matrix umfasst, wobei die Fasern zumindest teilweise als Leitungsfasern (22) ausgebildet sind, und wobei die Leitungsfasern (22) als Kohlenstofffasern (24) ausgebildet sind, **dadurch gekennzeichnet, dass**
die Leitungsfasern (22) eine elektrisch isolierende Beschichtung (26) aufweisen, und die elektrisch isolierende Beschichtung (26) als Polymer-Elektrolyt-Beschichtung ausgebildet ist.

2. Fußbodenplatte nach Anspruch 1, **dadurch gekennzeichnet, dass** die Leitungsfasern (22) einen oder mehrere geschlossene Stromkreise (30) bilden.

3. Fußbodenplatte nach Anspruch 1 oder 2, **dadurch gekennzeichnet, dass** die Form der Anordnung der Leitungsfasern (22) in der Faserverbundschicht (20) ausgewählt ist aus der Gruppe: Einzelfaser, Faserbündel, Faserbänder, Fasergelege, Fasermatten, Fasergewebe und Faservliese.

4. Fußbodenplatte nach einem der vorhergehenden Ansprüche, **dadurch gekennzeichnet, dass** die elektrisch isolierende Beschichtung (26) eine Dicke im Bereich von 0,1 Mikrometer bis 1 Mikrometer aufweist.

5. Fußbodenplatte nach einem der vorhergehenden Ansprüche, **dadurch gekennzeichnet, dass** die Leitungsfasern (22), derart in der Faserverbundschicht (20) integriert sind, dass die Leitungsfasern (22) zumindest endseitig aus der Faserverbundschicht (20) herausragen.

6. Fußbodenplatte nach einem der vorhergehenden Ansprüche, **dadurch gekennzeichnet, dass** die wärmeleitende Ebene (16) zumindest teilweise aus Titan oder einer Titanlegierung gebildet ist.

7. Fußbodenheizsystem (40) für den Kabinenboden (42) einer Flugzeugkabine (44), mit
a. einer Fußbodenplatte (10) nach einem der vorhergehenden Ansprüche,
b. einer Stromquelle (46) zur Bereitstellung elektrischer Heizleistung, wobei die Stromquelle (46) elektrisch an die Fußbodenplatte (10), insbesondere an den oder die geschlossen Stromkreise (30) angeschlossen ist.

8. Fußbodenheizsystem nach Anspruch 7, **dadurch gekennzeichnet, dass** es ferner eine Temperatursensoren (48) umfassende Regeleinheit (50) aufweist, mittels derer die Heizleistung der Stromquelle (46) regelbar ist.

9. Fußbodenheizsystem nach Anspruch 7 oder 8, **dadurch gekennzeichnet, dass** die Fußbodenplatte (10) im Bodenbereich (52) einer Flugzeugtüre (54) angeordnet ist.

## Claims

1. Heatable floor panel (10) for an aircraft (12), having:
a supporting level (14),
a heat-generating level (16), and
a heat-conducting level (18),
wherein the heat-generating level (16) comprises a fibre composite layer (20) with fibres and
with a matrix surrounding the fibres,
wherein the fibres are at least partially in the form of conducting fibres (22), and wherein the conducting fibres (22) are in the form of carbon fibres (24),
**characterized in that**
the conducting fibres (22) have an electrically insulating coating (26), and the electrically insulating coating (26) is in the form of a polymer electrolyte coating.

2. Floor panel according to Claim 1, **characterized in that** the conducting fibres (22) form one or more closed electrical circuits (30).

3. Floor panel according to Claim 1 or 2, **characterized in that** the form of the arrangement of the conducting fibres (22) in the fibre composite layer (20) is selected from the group: individual fibres, fibre bundles, fibre tapes, laid fibre scrims, fibre mats, woven and nonwoven fibre fabrics.

4. Floor panel according to one of the preceding claims, **characterized in that** the electrically insulating coating (26) has a thickness in the range from 0.1 micrometre to 1 micrometre.

5. Floor panel according to one of the preceding claims, **characterized in that** the conducting fibres (22) are integrated in the fibre composite layer (20) in such a way that the conducting fibres (22) protrude out of the fibre composite layer (20), at least at the ends.

6. Floor panel according to one of the preceding claims, **characterized in that** the heat-conducting level (16) is formed at least partially from titanium or a titanium alloy.

7. Floor heating system (40) for the cabin floor (42) of an aircraft cabin (44), having
a. a floor panel (10) according to one of the preceding claims,
b. a power source (46) for providing electrical heating power,
wherein the power source (46) is electrically connected to the floor panel (10), in particular to the closed electrical circuit(s) (30).

8. Floor heating system according to Claim 7, **characterized in that** it also has a control unit (50) comprising temperature sensors (48), by means of which the heating power of the power source (46) is controllable.

9. Floor heating system according to Claim 7 or 8, **characterized in that** the floor panel (10) is arranged in the bottom region (52) of an aircraft door (54).

## Revendications

1. Panneau de plancher chauffant (10) destiné à un aéronef (12), ledit panneau comprenant :
un plan support (14),
un plan générateur de chaleur (16) et
un plan conducteur de chaleur (18),
le plan générateur de chaleur (16) comprenant une couche de fibres composite (20) pourvue de fibres et d'une matrice entourant les fibres,
les fibres se présentant au moins partiellement réalisées sous la forme de fibres de conduction (22),
et les fibres de conduction (22) se présentant sous la forme de fibres de carbone (24),
**caractérisé en ce que** les fibres de conduction (22) comportent un revêtement électriquement isolant (26) et le revêtement électriquement isolant (26) est conçu comme un revêtement d'électrolyte polymère.

2. Panneau de plancher selon la revendication 1, **caractérisé en ce que** les fibres de conduction (22) forment un ou plusieurs circuits fermés (30).

3. Panneau de plancher selon la revendication 1 ou 2, **caractérisé en ce que** la forme de l'agencement des fibres de conduction (22) dans la couche de fibres composite (20) est choisie dans le groupe comportant : les fibres individuelles, les faisceaux de fibres, les rubans de fibres, les canevas de fibres, les nattes de fibres, les tissus de fibres et les non-tissés de fibres.

4. Panneau de plancher selon l'une des revendications précédentes, **caractérisé en ce que** le revêtement électriquement isolant (26) a une épaisseur dans la gamme allant de 0,1 micromètre à 1 micromètre.

5. Panneau de plancher selon l'une des revendications précédentes, **caractérisé en ce que** les fibres de conduction (22) sont intégrées dans la couche de fibres composite (20) de telle sorte que les fibres de conduction (22) dépassent de la couche de fibres composite (20) au moins du côté extrémité.

6. Panneau de plancher selon l'une des revendications précédentes, **caractérisé en ce que** le plan conducteur de chaleur (16) est au moins partiellement formé de titane ou d'un alliage de titane.

7. Système de chauffage de plancher (40) destiné au plancher (42) d'une cabine d'avion (44), ledit système comprenant
a. un panneau de plancher (10) selon l'une des revendications précédentes,
b. une source d'alimentation (46) destinée à fournir une puissance de chauffage électrique,
la source d'alimentation (46) étant reliée électriquement au panneau de plancher (10), en particulier au(x) circuit(s) fermé(s) (30).

8. Système de chauffage de plancher selon la revendication 7, **caractérisé en ce qu'**il comporte en outre une unité de régulation (50) qui comprend des capteurs de température (48) et qui permet de réguler la puissance de chauffage de la source d'alimentation (46).

9. Système de chauffage de plancher selon la revendication 7 ou 8, **caractérisé en ce que** le panneau de plancher (10) est disposé dans la zone de plancher (52) d'une porte d'avion (54).
